# EUROPEAN PATENT APPLICATION

(11) **EP 0 626 514 A1**
(43) Date of publication of application: **30.11.1994**
(21) Application number: 94303802.6
(22) Date of filing: 26.05.1994
(51) Int. Cl.: F02M 31/135

(54) **Fuel heater with variable fuel injection**

(30) Priority: 28.05.1993 JP 151103/93
(71) Applicant: TEXAS INSTRUMENTS INCORPORATED, Dallas Texas 75265 (US)
(72) Inventor: Yamashita, Takahisa, Suntoh-Gun, Shizuoka (JP); Sasaki, Kazuo, Gotenba-Shi, Shizuoka-Ken (JP)
(74) Representative: Abbott, David John

(57) **Abstract**

A fuel supply system is provided for an internal combustion engine using a fuel injector 7 with an additional fuel heater H to assist in heating fuel F from the injector 7 under specific engine conditions. A control unit 70 is used to sense the specific engine conditions and control a supply of gas A2 from a source coordinated with the operation of the fuel injector 7. When gas is supplied from the source, it contacts the fuel 7 from the injector so as to vary the amount of fuel to come into contact with the fuel heater H. In one embodiment, the fuel injector 7, heater H2 and gas source are all part of an integral injector assembly 57.

## Description

### Background of the Invention

This invention relates to a fuel supply system, and more particularly to a fuel supply system which can be suitably used for an internal combustion engine.

In the past, in a spark ignition gasoline internal combustion engine, a carburetor was used for mixing gasoline with the air that has been taken in and supplying same to the combustion chamber. The carburetor has the function of atomizing the gasoline by utilizing the negative pressure inside the engine and, if necessary, by automatically supplying a suitable amount of air to make a combustible gas.

Typically today, however, in passenger automobiles a fuel supply system utilizing a fuel injector has replaced the use of a carburetor. This change has at least in part been brought about by the use of electronic control in the total automobile. As improvements in electronic control has occurred also, improvements in injector performance has occurred.

The injector provides the function of positively atomizing and injecting gasoline into the combustion chamber without relying upon the negative pressure in the engine. Coupled with electronic control, it can provide better engine response (including cold start-up and acceleration) than typical previous carburetor systems.

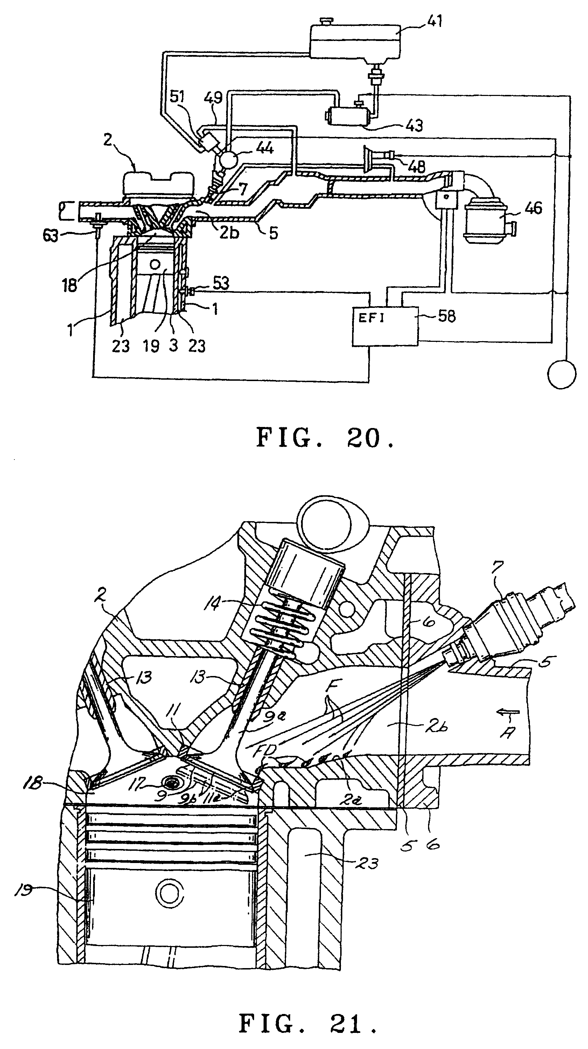

Figure 20 shows a prior art control system of a gasoline engine incorporating an electronic control fuel injection system. Upon start up of an engine, the gasoline is sent from the fuel tank 41 by means of a fuel pump 43 and supplied to an injector 7 which has been provided at each branch tube of a manifold 5 through a switch-over valve 44. The injected fuel is mixed together with air from the air intake (which will be described later) in the gas passageway 2b of the cylinder head 2.

The air from the air intake is introduced to the manifold 5 through an air cleaner 46 and an air valve 48 which controls the amount of the air intake. In addition, the air intake supplies air to an injector 7 from the branched tube 49 through a pressure adjuster 51 and the switch-over valve 44. From the injector 7, fuel mixed with air is injected into the passageway 2b and is fed to the combustion chamber 18 as a mixed gas.

A water temperature sensor 53 detects the temperature of the cooling water inside a cooling water jacket 23; and based upon reading of this temperature sensor, an injector control computer 58 controls the amount of the gasoline in the injector relative to the amount of the air intake. In the figure, code 63 indicates an oxygen sensor that detects the amount of the oxygen existing in the exhaust gas.

In the engine that has been constructed, as shown in Figures 20, 21, upon cold start up a part of the atomized gasoline F that has been injected from the injector 7 condenses by contacting the lower wall surface 2a of the mixed gas passageway 2b of the cool cylinder head 2. Accordingly, the gas forms liquid drops FD with a result that the gasoline belatedly enters a combustion chamber 18, as is shown in Figure 21. The liquid drops FD tend to cause irregular combustion and are liable to be converted into hydrocarbons, thereby producing a problem in terms of acceleration and operability because of irregular combustion.

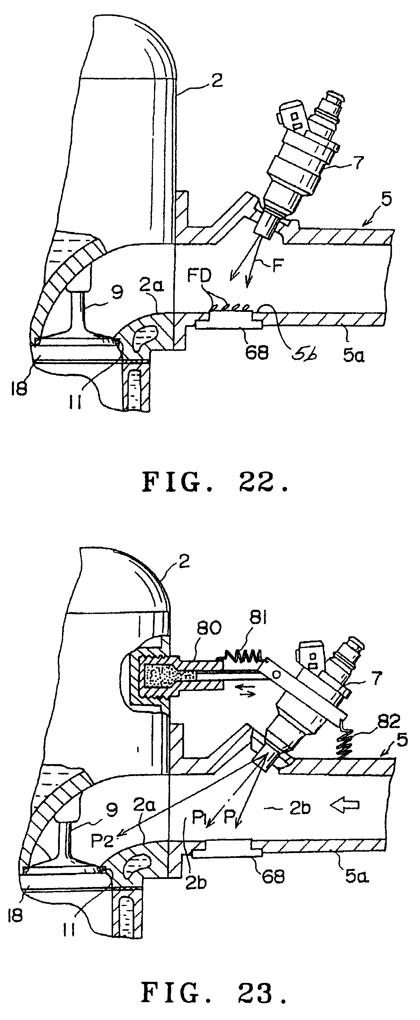

As a measure to counter such a phenomenon, a heater is provided on the lower wall side 5b of the branched tube 5a of the manifold 5 to receive and heat fuel from injector 7. Such an example is shown in Figure 22 where the heater 68 is buried on the lower wall surface 5b of the manifold branched tube 5a with its upper surface being exposed to the mixed gas passageway. The atomized gasoline that has been injected from the injector 7 contacts the heater 68; and as an intake valve 9 opens, it enters the combustion chamber 18. Then as the intake valve 9 closes, the atomized gas is ignited by an ignition plug (which is not shown in the drawings) thereby bringing about combustion. Even though the engine is cold at the startup of the engine, as during the wintertime or in early morning, the atomized gasoline F that has been injected is heated and evaporated by contacting the heat transfer surface of the heater 68.

When the engine is warm, as during the summertime or after a certain period of time after the startup of the engine, there is no need to heat the mixed gas with a result that the power to the heater 68 is stopped thus turning off the heater. Because of this fact, the atomized gasoline F then contacts the cool heater 68 which brings about such problems as:
(1) A drop in the output of the engine due to an increase in the take-in fluid;
(2) Delay in the combustion due to the spattering of the gasoline with a resultant deterioration of the response; and
(3) The adhesion and condensation of the diffused gasoline on the cylinder head 2 or the inner wall of the intake manifold branching tube 5a thereby being converted into liquid drops FD with a resultant rise in the rate of the production of hydrocarbons and exhaust gas emissions and an increase in the fuel cost.

These problems tend to develop in the so-called MPI (Multi-Position Injector) system in which an injector is allocated to each intake manifold branched tube.

Further, when a heater is positioned as described above and the heater is turned off, the heater is further cooled by the fuel thereby constituting a cold spot which further adversely affects the combustion as described earlier. Consequently, injection systems have been developed in which the direction of the injection of the injector is changed at the time when the heater is off such as at the time when the engine is warm. Such a system is shown in Figure 23.

An injector 7 is provided in which the direction is controlled by means of a rod and coil spring 81 and 82 of a link mechanism 80 so that the direction of injection can be automatically changed between P and P2 in conformity with the change in the temperature of the cylinder head. Nevertheless, the design suffers from problems in terms of durability, reliability and structural complication, etc.

As explained above, the adoption of the fuel injector system has become standard today to supply fuel to the engine of an automobile. Such injection systems have improved, but there is still the need and desire for an improved system over the aforementioned systems.

### Summary of the Invention

Accordingly, the present invention provides a fuel supply system for an internal combustion engine which supplies the fuel to the combustion chamber in the correct amount and state, both at the time when the engine is cold and at the time when the engine is warm thereby obtaining optimal firing performance at all times.

In accordance with this invention, a fuel supply device for an engine comprises a fuel injection means for supplying a stream of fuel to the engine, a fuel heating means for heating fuel that comes in contact with said fuel heating means, a gas supply means for supplying a stream of gas to contact the stream of fuel and change direction of flow of said stream of fuel, and control means for controlling said gas supply means so as to vary the amount of fuel to come in contact with said fuel heating means.

In accordance with another aspect of this invention, a fuel supply system for an engine having at least one combustion chamber comprises fuel injection means for supplying a stream of fuel to the engine, a fuel heating means for heating fuel that comes in contact with said fuel heating means, a gas supply means having a first state for supplying a stream of gas to contact said stream of fuel and a second state for supplying no gas and control means responsive to predetermined engine conditions for controlling said gas supply means so as to vary the amount of fuel to come into contact with said fuel heating means.

In accordance with still another aspect of this invention, the fuel heating means and gas supply means can be integrally made with said fuel injection means.

### Description of the Drawings

Other objects, advantages and details of the novel and improved fuel supply system of the present invention appear in the following detailed description of preferred embodiments of the invention, the detailed description referring to the drawings in which:
Figure 1 shows a cross-sectional view of a portion of a gasoline engine and fuel supply system according to the present invention at a time when the engine is warm;
Figure 2 shows a cross-sectional view of a portion of a gasoline engine and fuel supply system according to the present invention at a time when the engine is cold;
Figure 3 shows a cross-sectional view of a second embodiment of a portion of a gasoline engine and fuel supply system according to the present invention;
Figure 4 shows a cross-sectional view of a portion of a gasoline engine and fuel supply system according to a third embodiment of the present invention;
Figure 5 shows an expanded right side view of the heater shown in Figure 4;
Figure 6 shows an expanded left side view of a heater of Figure 4;
Figure 7 shows an expanded plane figure cut along line VII-VII in Figure 1 indicating the direction of the injection of the atomized gasoline for Figures 1 and 2;
Figure 8 shows an expanded cross-section view of the heater in Figures 1 and 2;
Figure 9 shows a first fluid circuit diagram for supply of air for the present invention;
Figure 10 shows a second fluid circuit diagram for supply of air for the present invention;
Figure 11 shows a fluid circuit diagram for the supply of gasoline to the injector;
Figure 12 shows a graph depicting the changes in the electric current and temperature of the heater VRS time;
Figure 13 shows the positional relationship of an injector, air induction passage and the heater in a fourth embodiment of the present invention;
Figure 14 shows a graph setting forth the relationship between the amount of air injection and the amount of the fuel that directly hits the heater;
Figure 15 shows a cross-sectional view of a portion of a gasoline engine and fuel entry system according to a fifth embodiment of the present invention;
Figure 16 shows a cross-sectional view of a portion of a gasoline engine and fuel entry system according to a sixth embodiment of the present invention;
Figure 17 shows an expanded cross-sectional view of an injector according to the present invention;
Figure 18 shows an expanded cross-sectional view of the tip of an injector assembly according to the present invention;
Figure 19 is an expanded cross-sectional view cut along line XIX-XIX in Figure 18;
Figure 20 shows a control system for a gasoline engine of an electronically controlled fuel injection system according to the prior art;
Figure 21 shows a cross-sectional view of a portion of a prior art gasoline engine and fuel supply system;
Figure 22 shows a cross-sectional view of a portion of another prior art gasoline engine and fuel supply system; and
Figure 23 shows a cross-sectional view of a portion of still another prior art gasoline engine and fuel supply system.

### Detailed Description of the Preferred Embodiments of the Present Invention

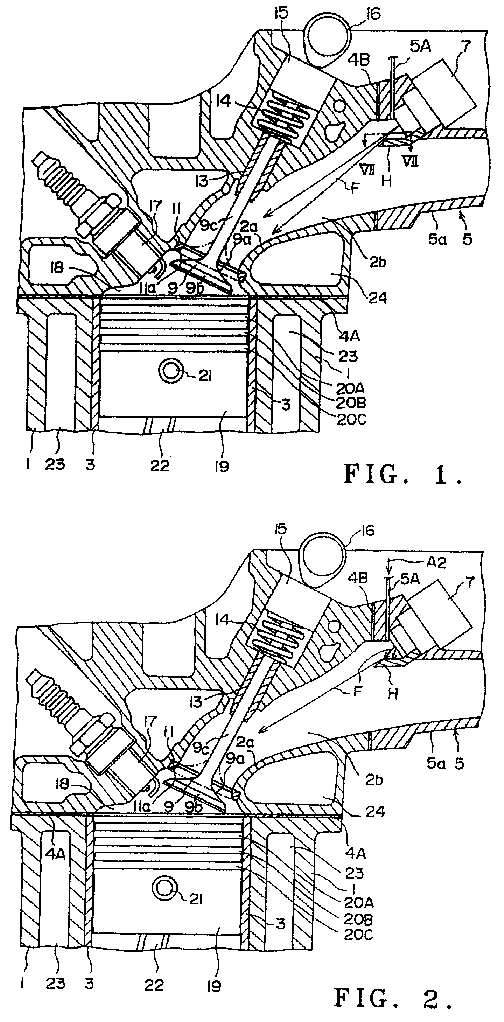

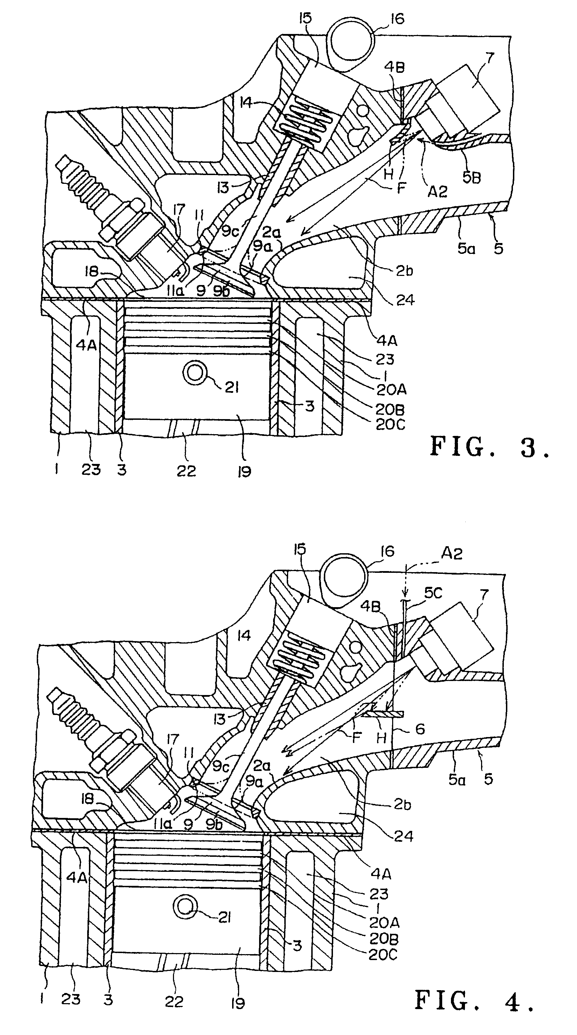

Figures 1 and 2 show a first embodiment of the present invention, Figure 3 shows a second embodiment and Figure 4 shows a third embodiment. All of these figures show a cross-sectional view of a fuel entry system and a combustion chamber of a four-cycle gasoline engine of the overhead cam-shaft (OHC) type, in which the intake, compression, ignition and exhaustion strokes are repeated.

A cylinder head 2 is fixed onto the cylinder block 1 through a gasket 4A. The cylinder head 2 is typically made of an aluminum alloy. An intake valve 9 is inserted in such a manner as to engage in reciprocating motion into a valve guide 13 which has been compressed into the cylinder head 2 and contacts a valve seat 11. In the drawing, code 9a indicates a valve head, 9b is a valve face and 9c is a valve stem.

The intake valve 9 is biased by a spring 14 and is contacted by a cam shaft 16 through a tappet 15. An exhaust valve is also installed on the cylinder head 2 by a similar mechanism; however, it does not appear in the drawings as it is hidden by the intake valve.

A piston 19 is inserted into a cylinder liner 3 which has been compressed into the cylinder block 1 and is sealed by the first pressure ring 20A and the second pressure ring 20B, and the supply of the lubricating oil is controlled by an oil scraping ring 20C. On the outer side of the cylinder liner 3 a water cooling jacket 23 is formed and the possible overheating of the cylinder liner 3 is prevented by cooling with water. An intake manifold 5 is installed on the cylinder head 2 through a gasket 4B and an injector 7 is fixed to the branched tube 5a of the intake manifold 5. The cooling water that has been warmed by the driving of the engine is led to a warm water jacket 24 in the cylinder head 2 to be used for warming the wall part of the mixed gas passageway 2b.

Figures 1 through 4 show the state immediately before the piston 19 reaches its upper dead point. Code 22 indicates a connecting rod which has been installed in a freely swaying fashion on the piston 19 by means of a piston pin 21. With the piston at this position, the intake valve 9 drops to a position indicated by a solid line in opposition to the strength of a spring 14 to create an opening between the intake valve 9 and the intake valve seat 11. This opening allows the mixed gas to enter the combustion chamber 18.

The mixed gas that has entered the cylinder bore in the intake stroke through the combustion chamber 18 is compressed in the combustion chamber 18 in the next compression stroke, and is ignited by the spark that is generated from an ignition plug 17 bringing about an explosion which pushes the piston 19 down, thereby rotating a crank shaft which is not shown in the drawing but which is located below the connecting rod 22.

During the compression stroke and thereafter, the intake valve 9 is restored to the original position which is indicated by an imaginary line and the valve face 9b contacts the face 11a of the intake valve seat and seals the combustion chamber 18 together with the intake valve seat 11.

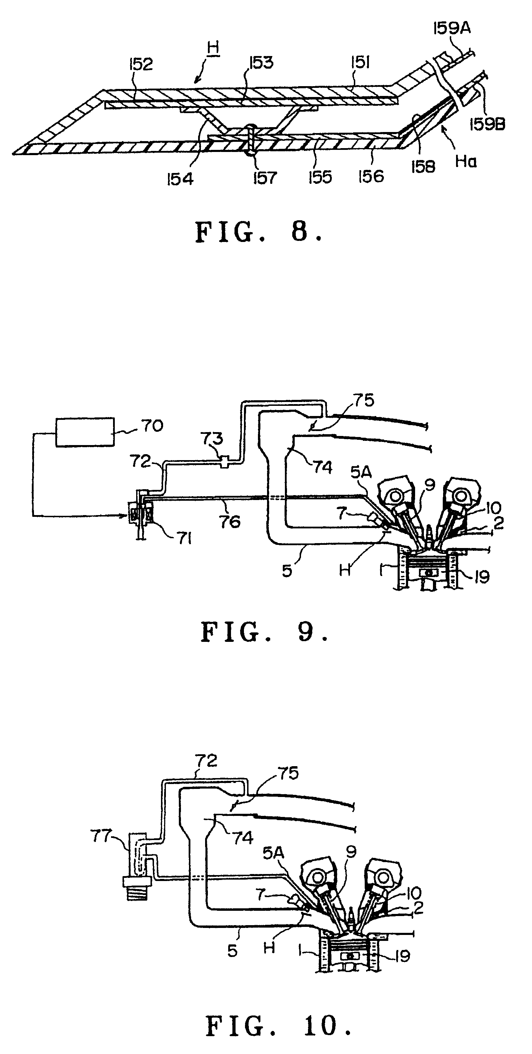

The heater H is preferably a plate heater using a heating element such as a positive temperature coefficient (PTC) heater (the structure of which could be explained later in connection with Figure 8). In the embodiment shown in Figures 1 and 2, the heater H is installed on the upper wall of the manifold branched tube 5a in the neighborhood of the injection opening in contact with or directly adjacent the injector 7.

Figure 1 shows the state at the time when the engine is warm, and Figure 2 shows the state at the time when the engine is cold.

An air induction route or passage 5A is provided on the upper wall of the manifold branched tube 5a on the down-stream side in contact with or directly adjacent the injector 7 to supply gas/air. At the time when the engine is warm as shown in Figure 1, no air is supplied from the air induction route 5A. That is, a supply of air from the air induction route or passage 5A does not take place; and the atomized gasoline from the injector 7 forms a fuel stream and moves toward the combustion chamber 18 without being condensed and without contacting the heater H together with desired air supply for combustion.

At the time when the engine is cold as shown in Figure 2, air A2 (a separate second air) is supplied/injected from the air induction passage 5A. Due to the pressure of this injected air, an atomized fuel stream F that has been injected from the injector 7 contacts the heater H due to the direction of the injection being bent, with a result that the gasoline is heated.

In Figures 3 and 4, the heater H is arranged at a location which is away from the injection opening of the injector 7. In Figure 3, the heater H is provided on the upper wall of the manifold branched tube 5a, and in Figure 4 it is provided at the center of the upstream side of the mixed gas passageway 2b. In Figure 3 the air induction passage 5B for supply of air is arranged in the neighborhood of the lower side of the injector 7, and in Figure 4 the air induction route passage 5C is arranged on the downstream side in the neighborhood of the injection opening of the injector 7.

In both embodiments shown in Figures 3 and 4, the atomized gasoline F moves toward the combustion chamber 18 without contacting the heater H as shown by a solid line at the time when the engine is warm. On the other hand, as shown by an imaginary line, the gasoline is deflected by air A2 to contact heater H and to be appropriately heated at the time when the engine is cold.

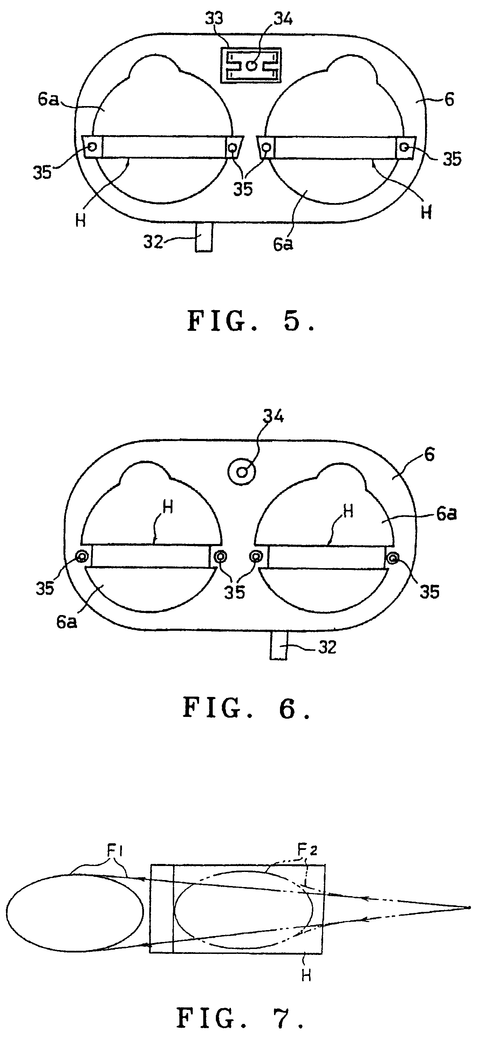

In the example shown in Figure 4, the heater H is fixed to an insulator 6 which is sandwiched between the manifold branched tube 5a and the cylinder head 2. Figure 5 is a right-side view of the insulator and the heater of Figure 4 and Figure 6 is a left-side view of the same. In this example, the two cylinder parts are made integral.

A pair of through holes 6a are provided on a platy insulator 6, and a heater H is installed on the insulator 6 by means of rivets 35 as if heater H is a bridge across the through holes 6a. A PTC element is connected to the electric source on the negative pole side that has been provided on the insulator 6 by means of a rivet 34. In the figure, code 32 indicates an electric source terminal on the side of the positive pole. The insulator 6 and the heater H can be produced integrally as a single body.

It should be noted in these examples the induction routes 5A, 5B and 5C of air A2 are provided adjacent or in close proximity to the injection opening of the injector 7.

The heater H in all embodiments one to three is positioned at a location where unaffected atomized gasoline F that has been injected from an injector will not generally come in contact with the heater. It is only when the air A2 is supplied (cold condition), and the direction of the injection of the atomized gasoline F is bent by its pressure, that the atomized gasoline F comes into contact with the heater H.

Further, when the pressure of air A2 is increased, the amount of the atomized gasoline that has been injected from the injector 7 coming into contact with the surface of the heater H will tend to increase. It is also necessary that the air A2 (second gas) is injected in conjunction with the injection timing of the injector controlled by a control means such as a computer.

Due to the above, the amount of the atomized gas that has been injected from the injector 7 which hits the surface of the heater H changes as shown in Figure 7, which represents a cross-section cut along line VII-VII in Figure 2. Without the effect of the air A2, the range for a direct impact on the wall surface at the lower side of the mixed gas passageway of the atomized gasoline F injected from the injection opening of the injector 7 is F1. With the supply of the air A2, the direct hitting area of the atomized gasoline changes to the area of F2 (the state in Figure 2 shown by an imaginary line). If the heater H is positioned at this location, the amount of contact increases by the effect of the gas A2, despite the fact that the amount of contact with the heater H was originally small or virtually zero.

Figure 8 shows a typical example of a heater employed in this invention. Specifically, Figure 8 shows the heater shown in Figures 1 and 2, but heaters of the same basic construction are typically used in the systems. A Positive Temperature Coefficient (PTC) element 153 normally composed of a ceramic such as barium titanate or the like is affixed to a top heating plate 151 made of an aluminum alloy or the like by an electroconductive adhesive 152.

The bottom sheet 156 is made of a heat-resistance resin such as an epoxy or phenol resin or a ceramic material. On top of same, a terminal plate 155 and a contact 154 are fixed together by means of a rivet 157 or the like with the contact 154 being elastically compressed to the PTC element 153. The top plate 151 and the bottom plate 156 form an installation part Ha to the cylinder head with one of the terminal sides being directed obliquely upward. The terminal elements 159A and 159B that have been fixed inside the installation part Ha are electrically connected to the terminal plate 155 and the PTC element 153 respectively by means of a cable 158 and the top plate 151.

The method or control means for the supply of air A2 as the second gas is shown in Figures 9 and 10. In Figure 9, the air A2 is electrically controlled through a computer. A control unit 70 that senses the temperature of the cooling water for the warm water jacket 24 (see Figure 1) generates a signal to the solenoid valve 71 to open unless the temperature has reached a certain level. Upon receiving the signal, the solenoid valve 71 opens the valve and connects an air transmitting pipe or tube 72 that leads from the chamber 74 and an air transmitting pipe 76 that leads to the manifold 5 to the valve.

The chamber 74 is in a high negative pressure state as compared with the up-stream pressure state side of a throttle valve 75 when the engine is operating and cold due to the throttle valve 75 being closed. Because of this, the high pressure air flows to the air transmitting pipe. A check valve 73 is provided halfway on the air transmitting pipe 72, with a result that the air A2 is automatically sent in conjunction with the action of the solenoid valve 71 without causing any reverse current.

Figure 10 shows a second embodiment for providing air A2 as the second gas with the use of a warm water valve 77. The warm water valve 77 is used in lieu of the aforementioned solenoid valve 71. The value contains a bimetal member therein and is positioned on the cylinder head so that as the cooling water for the engine is heated, the bimetal will respond to its temperature to appropriately regulate the passage 5A. The other piping, etc., are the same as in the case of the aforementioned solenoid with the timing of the injection being controlled by a control mechanism which is not shown in the drawings.

Because of the use of air A2 it becomes possible to simply change the direction of the injection of the atomized gasoline F that has been injected from the injector 7. If the atomized gasoline that has been injected from the injector 7 in this manner is caused to directly hit the heater H at the maximum efficiency, the fuel is completely evaporated by the surface temperature (which is approximately 100 degrees centigrade) of the heater H that has been sufficiently heated and is sent into the combustion chamber, thereby making it possible to achieve the startup of the engine in a satisfactory fashion.

At the time when the engine is cold, the stream of fuel (shown by an imaginary line) that has been injected from the injector 7 hits the heater H thereby being heated and atomized, and it is further directed in such a way as to move toward the combustion chamber 18 together with the intake air for efficient combustion.

At the time when the engine is warm, the center of the injection direction of the mixed gas is not faced to the heater H but is oriented toward the center of the intake valve seat 11. Thereupon, the stream of fuel F1 that has been injected from the injector 7 is atomized by the heat of the engine and is directly led to the combustion chamber 18 through the opening of the valve seat 11 without contacting the heater H. Accordingly, such problems as have been described do not take place with a result that efficient combustion takes place.

When the engine is warm, the following effects are also achieved. The fuel stream hits the curved surface of the valve head 9a which is located in the immediate neighborhood of the valve seat 11 of the intake valve 9. The fuel stream is further atomized as the heat is supplied from the valve head 9a, and it expands in the shape of a fan and enters the combustion chamber 18 thereby being in the state for ideal combustion. At the same time, the intake valve 9 is cooled as its heat is absorbed by the mixed gas so that it maintains satisfactory dimensional accuracy.

As stated above, the supply of the second gas A2 is carried out automatically by the computer control means which is responsive to cooling water temperature. It is to be understood, however, it can also be changed non-automatically with the automatic and non-automatic operations being carried out selectively.

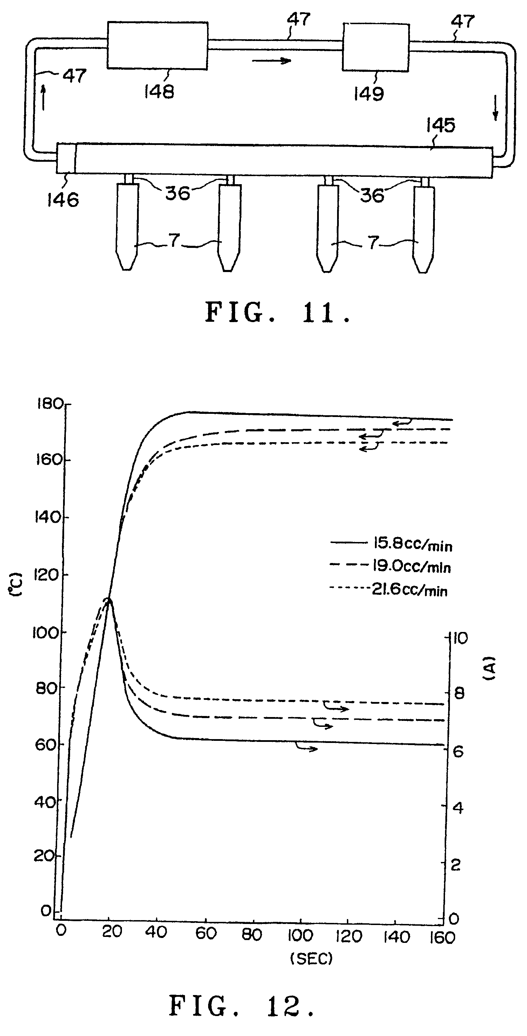

Figure 11 is a rough sketch showing an outline of the supply of the gasoline to the injectors.

The injectors have been provided to correspond to each of the four cylinders of an engine. The injectors are connected to a fuel supply main pipe 145 by induction pipes 36. The gasoline inside the fuel tank 148 is supplied to fuel supply main pipe 145 via piping 47 and by fuel pump 149 and returns to the fuel tank 148. The gasoline has its pressure adjusted by a pressure adjuster 146 which has been arranged at the downstream of the fuel supply main pipe 145.

Figure 12 shows typical bench test results upon start-up for the present invention.

A large amount of electric current flows until the temperature reaches 110 degrees centigrade, generally within 20 seconds after the startup of the engine, thereby providing the desired combustion efficiency due to the use of a heater. After that period of time, the temperature levels off in the neighborhood of approximately 170 degrees centigrade while the electric power consumed is being gradually reduced along with a rapid elevation of the temperature of the engine itself.

The same tendency is observed even when the conditions of the injection are changed. As the amount of the fuel injected increases, it is observe that the difference in the inverse proportional variation between the heater temperature and the electric power consumed becomes smaller.

As separate experimental data, the number of rotations of the engine based on the amount of the injected air as the second gas when the pressure of the fuel was set constant at 3.1 kilograms per square centimeter was 1600 rpm: 0ℓ per minute, 2000 rpms: 8ℓ per minute and 2400 rpm: 16ℓ per minute. Thus, it was proved that the number of the rotations of the engine increases along with an increase in the amount of air supplied.

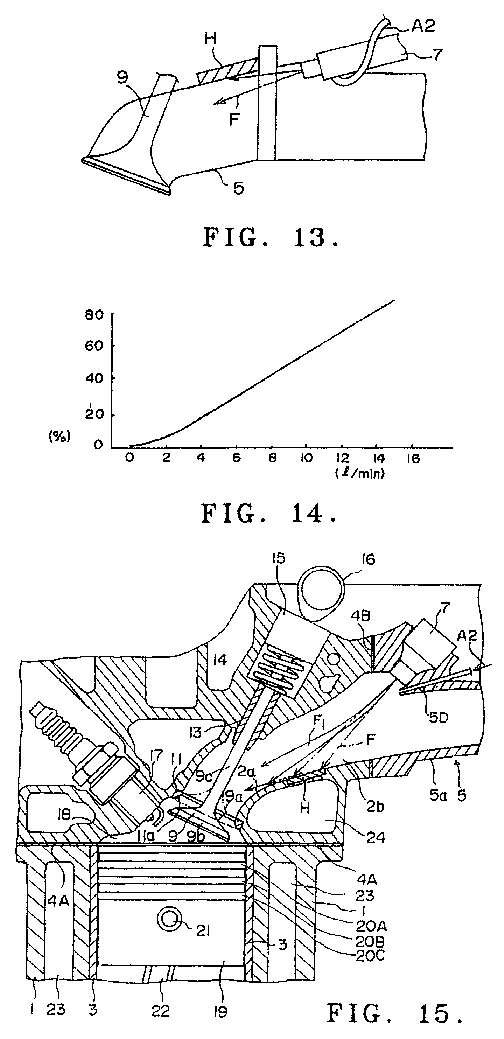

Figure 13 roughly shows an experiment in which the air-transporting pipe for the injected air as the second gas was shaped spirally and externally fitted to the injector. When this method is used in a 2000 cc four cylinder engine, the amount of air supplied per cylinder per minute at the time when the charging efficiency is approximately 80 percent will be approximately 850 rpm (in the idling state): 170ℓ per minute, 2000 rpm: 500ℓ per minute. Of this, if a certain amount of air in the range between two and 16ℓ per minute is biased and the fuel is curve-injected by means of a spiral pipe as described above, it has been learned that the rate of the direct hit of the fuel to the heater increases along with an increase in the amount of the air that is injected in a biased manner. A graph prepared on the basis of such data is shown in Figure 13.

In the various examples described above, the air A2 is injected so as to cause the atomized gasoline to move toward the heater at the time when the engine is cold and the injection of air A2 is stopped and the atomized gasoline is caused to move to the combustion chamber in such a way as to avoid the heater at the time when the engine is warm. However, it becomes possible to reverse the above by causing the air A2 not to be injected at the time when the engine is cold but causing the air A2 to be injected at the time when the engine is warm.

Figure 15 is similarly a cross-sectional view of the aforementioned engine as in the case of Figures 1 through 4. A heater H is buried with its surface exposed in the neighborhood of the intake manifold branched tube 5a on the bottom side of the intake port 2a of the cylinder 2. In addition, the injector 7 is provided in such a manner as to face the heater H and an air induction route 5D for the supply of air A2 is provided on the lower side of the injector 7.

At the time when the engine is cold, the air from the air induction route 5D is not supplied with the atomized gasoline F2 directly hitting heater H as shown by the imaginary line to be heated prior to entering chamber 18. At the time when the engine is warm, air A2 from the air induction route 5D is injected;-and because of its pressure, the atomized gasoline F1 has its injection direction changed and directly moves toward the combustion chamber 18 without contacting the heater H. In this manner, an effect which is similar to the effect obtained in the various examples shown in Figures 1 through 4 is obtained.

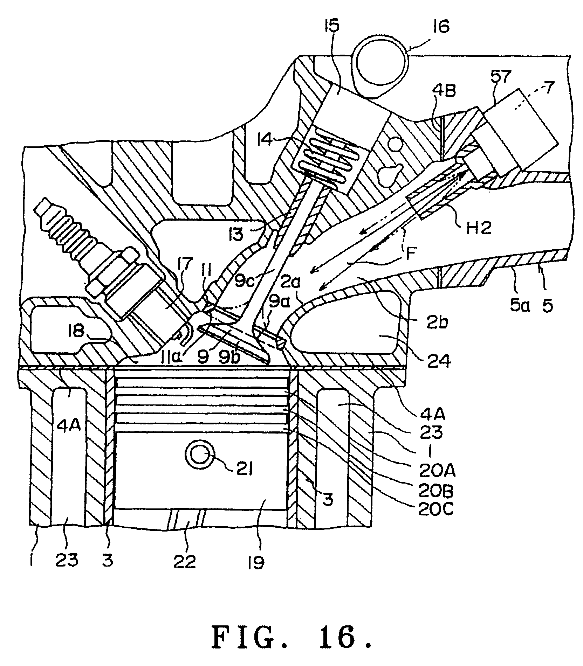

In each of the aforementioned examples, an air supply route and gas A2 was provided separately from the injector. However, it is possible to supply this air A2 into the injector. Figure 16 shows an example where a cylindrically-shaped heater is provided in such an injector.

When the engine is cold, the mixed gas injection angle from an injector assembly 57 is large and contacts to the inner peripheral surface of the cylindrically-shaped heater H2. At the time when the engine is warm, the mixed gas injection angle is reduced so that there is no contact with the heater H2.

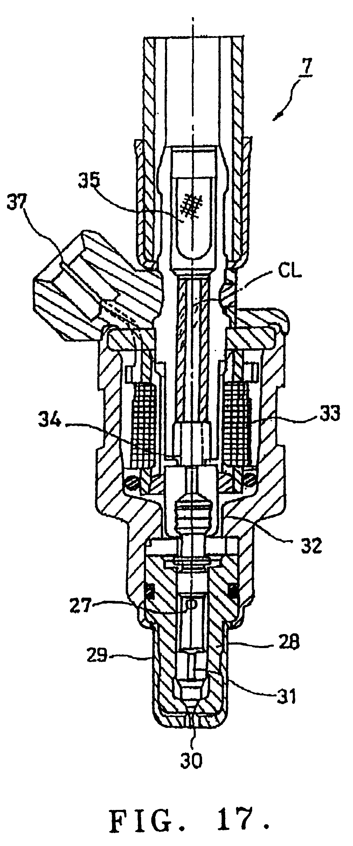

The injector assembly 57 has an injector accommodated within the assembly. Figure 17 is a cross-sectional view showing the construction of an injector. The construction of the injector 7 is common to both this embodiment and each of the aforementioned embodiments.

The main injector body 27 is supported in an adapter 29 by means of a main body support 28. A needle 31 is inserted through the main body 27 with a core 32 provided at the side away from the tip of the nozzle. The needle 31 is biased toward the tip of the nozzle by means of a return spring 34 in such a manner as to block the nozzle 30 at the tip of the main body.

When electricity is passed to an electromagnet coil 33 which has been provided around part of the core, the core 32 moves away from the nozzle as it is attracted by the electromagnetic coil 33 so that the nozzle 30 is opened; and the gasoline from the fuel induction pipe 35 is injected from the nozzle 30. In the Figure 17, item 37 indicates a terminal for supply of current to the electromagnetic coil.

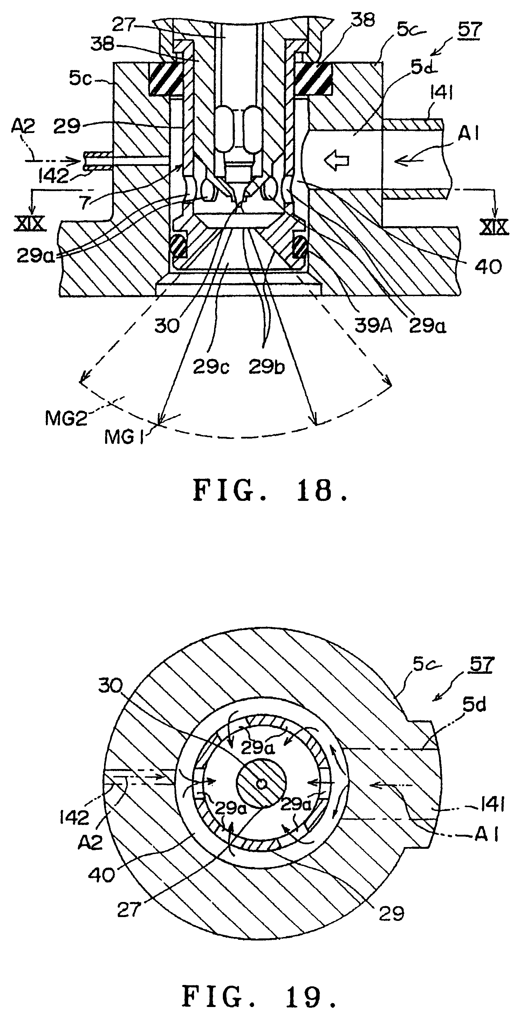

Figure 18 is an expanded cross-sectional view of the tip of the injector assembly 57. Figure 19 is a cross section cut along line XIX-XIX in Figure 18.

An injector 7 is supported through a flexible packing 38 and an O-ring 39A inside an injector support tube 5c that has been provided in the intake manifold branched tube 5a. An air introduction pipe 141 is installed in the injector support tube 5c and a through hole 5d which is linked therewith is provided. The adaptor 29 has through holes 29a at six locations and the tip of the adaptor 29 has an opening 29c in the shape of a cone formed by an inclined surface 29b.

A first air A1 that is supplied from the first air induction pipe 141 enters an empty gap 40 between the injector support tube 5c and the adaptor 29, as shown by an arrow mark in Figure 18, and enters the adaptor 29 through each through hole 29a and gets mixed with the gasoline that is injected from the nozzle 30 in Figure 18 to form a mixed gas MG1 in an atomized state.

An injector 7 is used as described above in the example where a heater H is used as described earlier. In this example, however, it is the state at the time when the engine is warm.

At the time when the engine is cold, the second air A2 (shown by an imaginary line) from the second air induction tube 142 is supplied together with the first air A1 that is supplied from the first air induction pipe 141. As the second air A2 is added to the first air A1, the pressure of the air supplied rises; and along with the widening of the injection angle of the mixed gas MG2, the particles of the atomized gasoline become finer and come in contact with heater H2.

As shown in Figures 16 and 18, the mixed gas MG2 contacts the inner peripheral surface of the cylindrically shaped heater H2 and is evaporated at high efficiency as it is assisted by the aforementioned atomization. The widening of the injection angle and the further atomization of the atomized gasoline due to the aforementioned pressure elevation constitute the same phenomena as in spraying.

In this example, the same effect is obtained as in the earlier described examples with the additional advantage that the design is simple with the heater as part of the injector assembly. In addition, the assembling operation of an engine becomes simpler as a heater is installed in the injector assembly.

Accordingly, the present invention provides an improved means for supplying fuel to an internal combustion engine. The means includes a fuel heating device and controls and means for regulating the amount of fuel to contact the heating device.

When it is necessary to activate the fuel heating means at the time when the engine is cold, the fuel is injected in such a fashion as to satisfactorily contact the fuel heating means thereby elevating the temperature of the fuel and evaporating the fuel and guaranteeing the combustion of the fuel. When there is no need to use the fuel heating means when the engine is warm, the fuel is injected in such a manner as to avoid the fuel heating means, thereby greatly reducing or eliminating the amount of the fuel that comes into contact with the fuel heating means thereby improving the combustion efficiency of the fuel.

While this invention has been described in combination with the specific embodiments thereof, it is evident that many alternatives, modifications and variations will be apparent to those skilled in the art in light of the foregoing description.

For example, not only air but also oxygen or oxygen-enriched air can be used as the first gas and/or the second gas. As the second gas, moveover, an inert gas which does not have any adverse effect on the exhaust gas can be used. In the case of the second gas, the supply and the stopping of supply as well as the amount of the supply can be changed as required.

The locations of the injector and the heater to be installed can be at any suitable location in addition to those locations described in this application. The shape, structure and the material of the heater can be modified and the heating element to be used can be other than a self regulating PTC element.

In addition, the amount of the contact of the gasoline with the heater can be modified by changing the direction of the supply/injection of the second air and/or using a plurality of air induction routes. The above embodiments have generally been described for four-cycle reciprocating engines. However, this invention can be applied to other engines such as the rotary piston engine. This invention can also be used for the supply of fuel to the various engines and devices other than the internal combustion engine.

## Claims

1. A fuel supply device for an engine comprising a fuel injection means for supplying a stream of fuel to the engine, a fuel heating means for heating fuel that comes in contact with said fuel heating means, a gas supply means for supplying a stream of gas to contact the stream of fuel, and control means for controlling said gas supply means so as to vary the amount of fuel to come into contact with said fuel heating means.

2. A fuel supply device as set forth in claim 1 wherein said control means responds to predetermined engine conditions to selectively control the stream of gas from the gas supply means.

3. A fuel supply device as set forth in claim 1 or 2 wherein said gas supply means supplies a gas stream in a first state and does not supply a gas stream in a second state in response to a signal from the control means.

4. A fuel supply device as set forth in claim 3 wherein said gas supply means in said first state varies the direction of said stream of fuel to increase the amount of fuel that contacts said fuel heating means.

5. A fuel supply device as set forth in claim 3 wherein said gas supply means in said first state varies the direction of said stream of fuel to decrease the amount of fuel that contacts said fuel heating means.

6. A fuel supply device as set forth in claim 1 wherein said gas supply means varies the direction of said stream of fuel to essentially prevent fuel from contacting said fuel heating means.

7. A fuel supply device as set forth in claim 1 which includes a fuel passageway to the engine and said gas supply means is a separate source of gas from gas in said fuel passageway.

8. A fuel supply device as set forth in claim 1 which includes a fuel passageway to the engine and said fuel injector means and said fuel heater means are provided in a wall part of the fuel passageway.

9. A fuel supply device as set forth in claim 1 which includes a fuel passageway to the engine and said fuel heater means is contained within said passageway.

10. A fuel supply device as set forth in claim 1 in which said fuel heater means includes a positive temperature coefficient (PTC) element for heating.

11. A fuel supply device as set forth in any one of claims 1 to 5 in which said engine has at least one combustion chamber and said stream of fuel from said fuel injector means is directed toward one of the at least one combustion chamber.

12. A fuel supply device as set forth in any one of claims 1 to 5 in which said engine has at least one combustion chamber and said fuel injection means is directed toward said fuel heater means.

13. A fuel supply device as set forth in claim 1 in which said fuel injection means, said fuel heater means and said gas supply means are all part of a fuel injection assembly.

14. A fuel supply device of claim 13 wherein said fuel stream is formed from gas and fuel in the fuel injection assembly which is contacted by gas from the gas supply means within said fuel injection assembly to alter the flow path of the fuel stream to contact said heater means.
